Europäisches Patentamt

European Patent Office

Office européen des brevets

(19)

(11) Publication number: **0 072 225**
**B1**

(12) # EUROPEAN PATENT SPECIFICATION

(45) Date of publication of patent specification: **04.12.85**

(21) Application number: **82304167.8**

(22) Date of filing: **06.08.82**

(51) Int. Cl.⁴: **A 01 N 1/02** // F25D3/10, F25D3/00

(54) Method of freezing fertilized ova, spermatozoa or the like and apparatus therefor.

(30) Priority: **10.08.81 JP 124996/81**
**10.08.81 JP 124997/81**
**16.09.81 JP 137410/81**
**18.11.81 JP 184815/81**
**14.01.82 JP 3761/82**
**12.03.82 JP 34839/82**

(43) Date of publication of application:
**16.02.83 Bulletin 83/07**

(45) Publication of the grant of the patent:
**04.12.85 Bulletin 85/49**

(84) Designated Contracting States:
**CH DE FR GB LI**

(56) References cited:
**GB-A-2 004 182**
**GB-A-2 049 140**

(73) Proprietor: **HOXAN CORPORATION**
**2, 1-chome, Nishi Kita-Sanjyo**
**Chuo-ku Sapporo-shi Hokkaido (JP)**

(72) Inventor: **Sakao, Nobuo c/o Hoxan Laboratory**
**Hoxan Corporation 3-17, 2-chome 5-jyo, Kikusui**
**Shiroishi-ku Sapporo-shi Hokkaido (JP)**
Inventor: **Kuraoka, Yasui c/o Hoxan Laboratory**
**Hoxan Corporation 3-17, 2-chome 5-jyo, Kikusui**
**Shiroishi-ku Sapporo-shi Hokkaido (JP)**

(74) Representative: **Wain, Christopher Paul et al**
**A.A. THORNTON & CO. Northumberland House**
**303-306 High Holborn**
**London WC1V 7LE (GB)**

## Description

This invention relates to a novel method of freezing fertilized ova or spermatozoa and an apparatus for freezing the same adapted for carrying out the same method.

Artificial fertilization has been recently carried out to improve the breed of domestic animals and growth of domestic animals. In this case, fertilized ova and spermatozoa have been preserved by freezing.

It is heretofore known to place the fertilized ova and spermatozoa in a buffer solution contained in a tube and to freeze the buffer solution as a method of freezing the fertilized ova and spermatozoa.

A temperature change with respect to time of a pure substance when the substance is cooled under a constant pressure is generally known as a cooling curve. The substance does not always start freezing immediately when it reaches its freezing point, but will start generally freezing after the substance is super cooled to a temperature lower than its freezing point. Simultaneously, the temperature rises to the true freezing point, and the temperature of the substance then lowers again after the entire substance is completely frozen.

The buffer solution is super cooled during the freezing step according to the above-mentioned conventional freezing method and thereafter its temperature is immediately raised. Therefore, the fertilized ova and spermatozoa may die due to the thermal shock of this abrupt temperature change according to the conventional freezing method.

It has been proposed to avoid such a thermal shock in a method of freezing fertilized ova and spermatozoa by removing the buffer solution cooled to the freezing point and by holding a tube containing the buffer solution with a pincette preserved in liquefied nitrogen, thereby proceeding with the freezing from the held portion. This method lacks actual utilization due to the fact that the removal of the tube adversely affects the temperature of the buffer solution by foiling to freeze the solution. Also automatic control is difficult due to the complicated operations.

Accordingly, an object of this invention is to provide a method of freezing fertilized ova or spermatozoa which can eliminate the aforementioned drawbacks and disadvantages of the conventional freezing methods and which can raise the survival rate of the fertilized ova or spermatozoa by enabling freezing without cooling to a super cooled state.

Another object of this invention is to provide a method of freezing fertilized ova or spermatozoa which can be readily carried out under automatic control with simple cooling means.

Yet another object of this invention is to provide a method of freezing fertilized ova or spermatozoa the workability of which can be improved by suitably determining the refrigerant temperature for the temperature control of the buffer solution.

Still another object of this invention is to provide an apparatus for freezing fertilized ova or spermatozoa which can adequately carry out the above-mentioned method.

Still another object of this invention is to provide an apparatus for freezing fertilized ova or spermatozoa which can maintain a tube containing buffer solution dipped in a refrigerant so as to execute the above-described method.

According to a first aspect of the present invention, there is provided a method of freezing fertilized ova or spermatozoa in which the fertilized ova or spermatozoa are placed in a buffer solution in a tube, and cooled by the action of a refrigerant, characterised in that the fertilized ova or spermatozoa to be frozen are congregated in a first portion of the buffer solution, a second portion of the buffer solution containing no fertilized ova or spermatozoa to be frozen is cooled so that the temperature of the second portion is lower than the temperature of said first portion and freezes to produce crystalline nuclei, maintaining the temperature of the first portion of the buffer solution substantially at the freezing point of the buffer solution, then cooling the crystalline nuclei in the second portion so that nuclei grow into the first portion to freeze the buffer solution, thereby freezing the fertilized ova or spermatozoa.

According to a second aspect of the present invention, there is provided an apparatus for freezing fertilized ova or spermatozoa which are contained in a buffer solution in a tube coolable by a refrigerant, characterised in that the apparatus comprises a base (24) floated on the liquid surface of the refrigerant and means to so support said tube (1) in said base (24) that a portion of said buffer solution containing no fertilized ova or spermatozoa to be frozen extends from said floating base (24) upwardly for a predetermined length into a vapor phase portion above the refrigerent liquid surface and a portion of the buffer solution containing the fertilized ova or spermatozoa to be frozen extends from said floating base (24) downwardly for a predetermined length into the liquid refrigerant.

According to a third aspect of the present invention there is provided an apparatus for freezing fertilized ova or spermatozoa which are contained in a buffer solution in a tube coolable by a refrigerant, characterised in that the apparatus comprises a tube (1) containing a first portion of the buffer solution which contains fertilized ova or spermatozoa to be frozen and a second portion of the buffer solution which contains no fertilized ova or spermatozoa to be frozen, a constant low temperature tank (8) containing the refrigerant, a cover plate (36) to close an opening in the tank (8), a guide rod (37) mounted substantially vertically on the cover plate (36), upper and lower mounting members (38, 39) of synthetic resin mounted on said guide rod, and a slide pin (41) of synthetic resin for holding said tube (1) and urged resiliently downwardly from said upper mounting member (38), thereby releasably holding said tube (1) between said slide pin (41) and said lower mounting member (39).

According to a fourth aspect of the present invention, there is provided an apparatus for freezing fertilized ova or spermatozoa which are contained in a buffer solution in a tube coolable by a refrigerant characterised in that the apparatus comprises a tube (1) containing a first portion of the buffer solution containing the fertilized ova or spermatozoa to be frozen and a second portion of the buffer containing no fertilized ova or spermatozoa to be frozen, an inner tank (53) containing the refrigerant, a cover (54) attachable to the upper edge of said inner tank (53), an outer tank (56) containing heat exchanging medium and integrally formed with and surrounding said inner tank (53), a tube erecting base (58) removably contained in said inner tank (53), an agitator (59), a heater (61) and a thermometer (60) located in said inner tank (53) the cover (54) of said inner tank (53) being detachably connectable to a low temperature liquefied gas container (57), and having a low temperature liquefied gas supply port (64) and a vaporized gas exit port (65) for commuincation with said container (57).

According to a fifth aspect of the present invention, there is provided an apparatus for freezing fertilized ova or spermatozoa which are contained in a buffer solution in a tube coolable by a refrigerant characterised in that the apparatus comprises a plurality of tubes (1) each containing a first portion of the buffer solution containing fertilized ova or spermatozoa to be frozen and a second portion of the buffer solution containing no fertilized ova or spermatozoa to be frozen, the second portion being disposed above the first portion, a cooling tank (70) containing a first refrigerant a tube erecting trestle (72) to so support said tubes (1) that the upper portions thereof extend into a vapor phase formed in the upper portion of said cooling tank (70), and a heat transfer block (77) engagable on the upper ends of said tubes (1) and provided with a recess (79) thereon to contain a second refrigerant.

Embodiments of the invention will be more particularly described by way of example and with reference to the accompanying drawings, in which:

Figure 1 is a front, longitudinal sectional view of a tube containing fertilized ova or spermatozoa used in a method of freezing the fertilized ova or spermatozoa embodying the present invention;

Figures 2A and 2B are front, longitudinal sectional views of modified examples of a tube containing fertilized ova or spermatozoa;

Figures 3 and 5 are front, longitudinal sectional views of apparatuses for freezing fertilized ova or spermatozoa to carry out the method of freezing embodying the present invention;

Figure 4 is a graph showing the cooling curve of a buffer solution used in the method embodying the present invention;

Figure 6 is an overall view of an apparatus for freezing fertilized ova or spermatozoa according to another embodiment of the invention;

Figure 7 is a graph showing the cooling curves of a buffer solution containing no fertilized ova or spermatozoa in a tube and another buffer solution containing the same in a tube with respect to the time;

Figure 8 is a front, longitudinal sectional view showing yet another embodiment of an apparatus for freezing fertilized ova or spermatozoa used to carry out the method of the first preferred embodiment;

Figure 9 is a front, longitudinal sectional view of a temporarily installed freezing apparatus to improve the features of the apparatus shown in Figure 8;

Figure 10 is a front, longitudinal sectional view of a tube holding mechanism used in the apparatus shown in Figure 8 to improve the features thereof;

Figure 11 is a front, longitudinal sectional view showing a further preferred emodiment of an apparatus for freezing fertilized ova or spermatozoa used to carry out the method;

Figure 12 is a front, enlarged longitudinal sectional view of a modified embodiment of the apparatus according to the present invention;

Figure 13 is a front, longitudinal sectional view showing still another preferred embodiment of an apparatus for freezing fertilized ova or spermatozoa used in the method;

Figure 14 is a perspective view of a tube holding mechanism of the apparatus according to the present invention; and

Figure 15 is a front, longitudinal sectional view showing still another preferred embodiment of an apparatus for freezing fertilized ova or spermatozoa used in the method of the present invention.

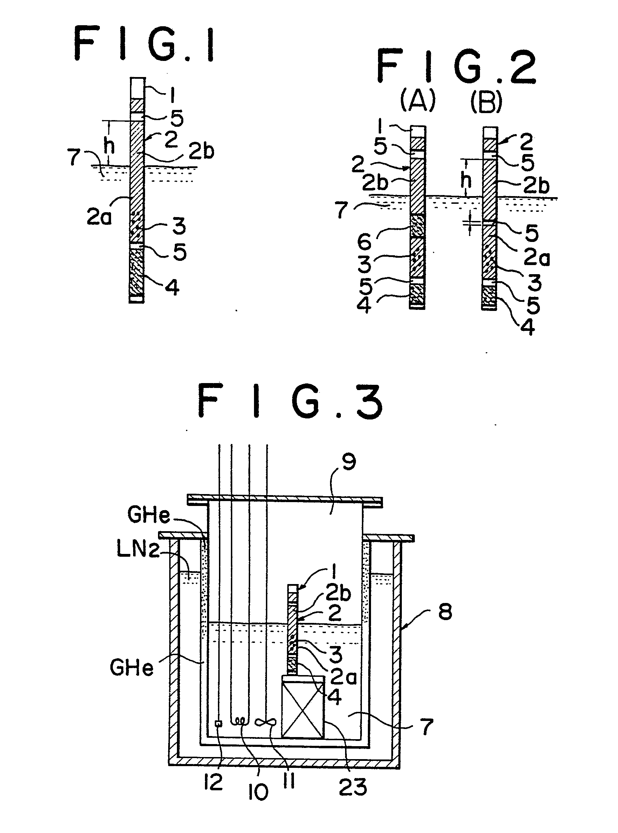

Referring first to Figures 1 to 5, which show one preferred embodiment of a method of freezing fertilized ova or spermatozoa and one preferred embodiment of an apparatus for carrying out the same method. Like reference numerals designate the same or equivalent parts in the following views. A buffer solution 2 is prepared by dissolving, for example dimethyl sulfoxide (DMSO), dextrose, glycerin and/or sodium citrate in distilled water. The buffer solution 2 thus prepared is placed in a tube 1, e.g., a straw tube as shown in Figure 1, and the fertilized ova or spermatozoa 3 to be frozen are added to the buffer solution 2.

A cotton wool plug 4 is placed in the lower end of the tube 1, and the fertilized ova or spermatozoa 3 to be frozen are positioned irregularly in substantially the lower half portion of the buffer solution 2 in the lower end of the tube 1.

When it is desired to have the fertilized ova or spermatozoa in one segment of the buffer solution by dividing the buffer solution into a plurality of buffer solution segments, segmenting gaps 5 may be formed with air bubbles at a suitable position or positions of the buffer solution 2 as shown in Figures 1 and 2B. Alternatively a cotton wool plug 4 may be used as a segmenting gap in the tube as shown in Figure 2A. In this case, the gaps 5 formed are substantially less than 2 mm.

When the tube 1 is then cooled the entirety of the tube 1 is not cooled, but a difference of phases is provided at the cooling temperature between a buffer solution segment 2a containing the fertilized ova or spermatozoa in the lower portion of the tube 1 and a buffer solution segment 2b containing no fertilized ova or spermatozoa in the upper portion of the tube 1. The buffer solution segment 2b is first frozen to form crystalline nuclei, and the crystalline nuclei thus produced then pass to the buffer solution segment 2a, thereby freezing the fertilized ova or spermatozoa 3.

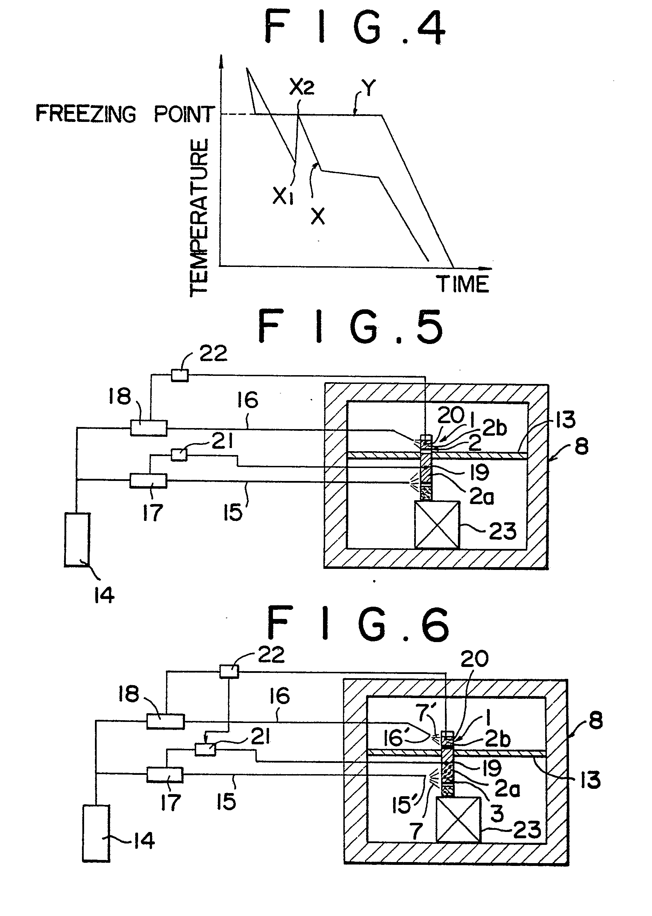

Figures 3 and 5 show preferred embodiments of an apparatus for freezing fertilized ova or spermatozoa. Figure 3 shows one embodiment of the apparatus which has a double wall constant low temperature tank 8 containing refrigerant 7, in which a tube 1 is so arranged that the buffer solution segment 2a is dipped in the refrigerant 7 and the buffer solution segment 2b project from the surface of the refrigerant 7 into a vapor phase section 9. The height h from the liquid surface to the segmenting gap 5 is preferably, as shown in Figures 1 and 2, larger than 30 mm.

In this apparatus, liquid nitrogen ($LN_2$) or He gas (GHe) is contained in the space between the double walls of the constant low temperature tank 8, and the refrigerant 7 may include, for example, isopentane. The apparatus further has a heater 10, an agitator 11 and a temperature sensing element 12 arranged in the refrigerant 7. The temperature of the refrigerant 7 is controlled by a controller (not shown) so that the buffer solution 2 is maintained at its freezing point (e.g., −4.2°C).

As described above, the temperature of the buffer solution 2 is maintained constantly at the freezing point.

The vapor phase section 9 of the constant low tempertaure tank 8 contains vaporized refrigerant with the result that the temperature of the buffer solution 2 is approximately 30°C below the freezing point of the buffer solution 2.

Accordingly, the buffer solution segment 2b located above the liquid surface of the refrigerant 7 becomes super cooled as shown by cooling curve X in Figure 4, and is frozen upon an abrupt temperature rise from the super cooled point X1.

On the other hand, the buffer solution segment 2a in the refrigerant 7 is not affected by the influence of the above-mentioned temperature rise of the buffer solution segment 2b, but is maintained at the constant temperature of the freezing point as shown by cooling curve Y in Figure 4.

In this manner, crystalline nuclei are produced by the freezing of the buffer solution segment 2b as described above, and pass to the buffer solution segment 2a.

To aid the growth of the crystalline nuclei, the temperature of the refrigerant 7 is preferably lowered gradually. Thus, the crystalline nuclei pass abruptly into the buffer solution segment 2a, and the buffer solution segment 2a in the refrigerant 7 is frozen without becoming super cooled.

The temperature X2 in Figure 4 is the starting point of freezing of the buffer solution segment 2b and hence the starting point of freezing of the buffer solution 2a. After the buffer solution segment 2a has completely frozen at the freezing point, its temperature is lowered to approx. −100°C by the refrigerant 7 as illustrated by the cooling curve Y, and the tube 1 is preserved in the liquefied nitrogen.

In the apparatus shown in Figure 5, a tube 1 contained in a constant low temperature tank 8 is divided into upper and lower sections by a partition plate 13. The buffer solution segment 2a contained in the tube 1 is cooled to desired temperature (freezing point) as described above by the refrigerant from a liquefied gas source 14, and the buffer solution segment 2b contained in the upper portion is frozen separately with the refrigerant from the liquefied gas source 14. Thus, crystalline nuclei are produced therein, and the buffer solution segment 2a is frozen while maintaining at the temperature constant and its temperature is gradually lowered to grow the crystals so as to freeze the fertilized ova or spermatozoa 3.

In the apparatus of the embodiment shown in Figure 5, there are arranged refrigerant supply lines 15, 16 from the liquefied gas source 14 to the constant low temperature tank 8. Heat exchangers 17, 18 are arranged respectively in the refrigerant supply lines 15, 16 and temperature detectors 19, 20 are provided in the buffer solution segments 2a and 2b in the tube 1 for sensing the temperature of the respective buffer solution segments 2a and 2b. Temperature controllers 21 and 22 are connected respectively to the temperature detectors 19 and 20 and also connected respectively to the heat exchangers 17 and 18. The heat exchangers 17 and 18 are thereby actuated to control the temperatures of the buffer solution segments 2a and 2b to their desired temperatures, respectively. In this manner, the temperatures of the refrigerant acting on the buffer solution segments 2a and 2b are individually controlled.

As described above the buffer solution segment 2a containing the fertilized ova or spermatozoa is cooled, but not frozen, and the buffer solution segment 2b is first frozen by the refrigerant. Then the crystalline nuclei thus obtained grow toward the buffer solution segment 2a, thereby freezing the buffer solution segment 2a indirectly. Therefore, the buffer solution segment 2a containing the fertilized ova or spermatozoa is not super cooled during freezing. Thus, death of the fertilized ova or spermatozoa due to abrupt temperature rise can be avoided, thereby increasing the survival rate. The method can be performed with various types of suitable apparatus, and automatic control may be applied to the apparatus, which can thereby be adapted for mass production.

In case of freezing fertilized ova or spermatozoa as described above, various types of buffer solutions 2 contained in the tube 1 may be employed. The temperature of the coolant for controlling the temperature of the buffer solution should be determined every time a different buffer solution is used, to hold the buffer solution segment 2b at its freezing point. Accordingly, it is necessary to measure the freezing point of the buffer solution and to set the control temperature based on the measured value.

This causes the method to become more complicated and therefore less efficient. Therefore, the embodiment of the method described above may be further improved as below.

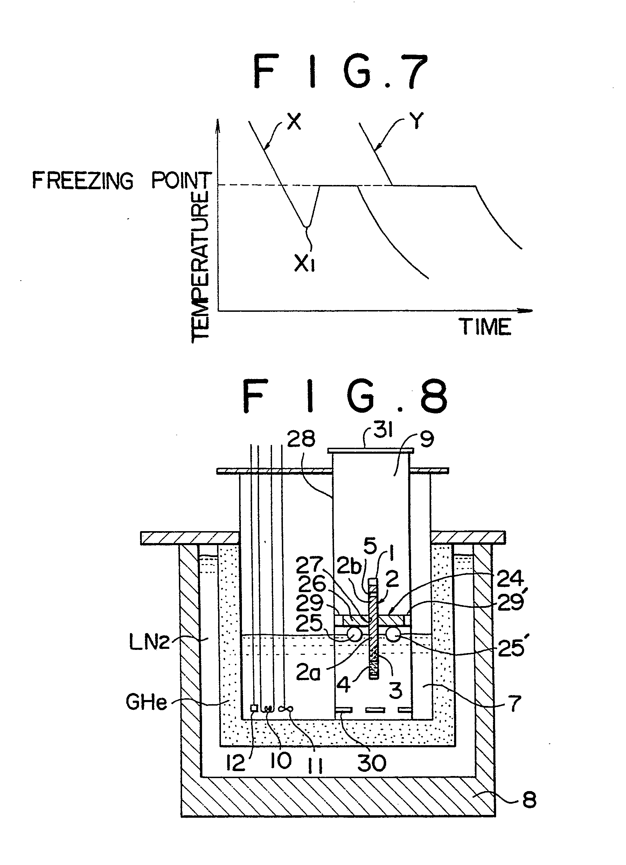

Referring now to Figures 6 and 7, which show another preferred embodiment of a method of freezing fertilized ova or spermatozoa, the fundamental constitution of the apparatus for carrying out the method of this embodiment is, as shown in Figure 6, similar to that shown in Figure 5. The buffer solution segment 2a containing the fertilized ova or spermatozoa 3 to be frozen is located below a partition plate 13 installed in a constant low temperature tank 8 and is cooled by refrigerent 7. The buffer solution segment 2b is located above the partition plate 13 and is cooled by the refrigerant 7'. The refrigerants 7, 7' are supplied from a liquefied gas source 14 as described below. The refrigerant 7 is first supplied through a lower refrigerant supply line 15 provided with a heat exchanger 17 and is ejected from a nozzle 15' toward the buffer solution segment 2a. A temperature detector 19 is further provided in the buffer solution segment 2a in the tube 1 for sensing its temperature, and a temperature controller 21 is connected to the temperature detector 19 and also to the heat exchanger 17 for controlling a current to a heat source (not shown), e.g., an electric heater of the heat exchanger 17.

The refrigerant 7' is similarly supplied through an upper refrigerant supply line 16 provided with a heat exchanger 18 and is ejected from a nozzle 16' toward the buffer solution segment 2b. A temperature detector 20 is provided in the buffer solution segment 2b in the tube 1 for sensing the temperature of the buffer solution segment 2b. A temperature controller 22 is connected to the temperature detector 20 and also to the heat exchanger 18 for controlling a current to a heat source (not shown). Further, both the temperature controllers 21 and 22 are connected one to another, and thus the maximum temperature value is supplied as the set temperature value to be controlled by the temperature controller 21 when the incoming detection signal from the temperature detector to the temperature controller 22 reaches the maximum value.

In this method the fertilized ova or spermatozoa 3 are frozen by the steps of placing the tube 1 in the constant low temperature tank 8 as described above, and then supplying the refrigerants 7, 7' from the liquefied gas source 14 through the refrigerant supply lines 15, 16 to the constant low temperature tank 8 to lower individually the temperatures of the buffer solution segments 2a and 2b. In this case, the temperature of the refrigerant 7' is such that the temperature of the buffer solution segment 2b is lowered as shown by the cooling curve X in Figure 7 to the super cooled state below its freezing point. The buffer solution segment 2b is then frozen with an abrupt temperature rise from the super cooled point X1 in Figure 7, and crystalline nuclei are produced.

The temperature detector 20 detects this freezing point and supplies a signal to the temperature controller 22. Controller 22 then signals controller 21 to further control the heat exchanger 17 to provide a tempertaure lower by approx. 0.5°C than the freezing point (the measured temperature) and the temperature of the buffer solution segment 2a is controlled by cooling with the refrigerant 7 to the vicinity of the freezing point as shown by the cooling curve Y in Figure 7.

As described above, the crystalline nuclei produced in the buffer solution segment 2b grow into the buffer solution segment 2a maintained in the vicinity of the freezing point, and the buffer solution segment 2a is accordingly frozen without becoming super cooled to freeze the fertilized ova or spermatozoa 3 to be frozen.

The freezing point of the buffer solution is measured by utilizing the freezing point of the buffer solution segment containing no fertilized ova or spermatozoa to be frozen, and the temperature of the buffer solution segment containing the fertilized ova or spermatozoa to be frozen, is automatically controlled in this manner. Therefore, it becomes unnecessary to measure the freezing point of the various buffer solutions, and the freezing step can be efficiently performed. Further, the setting of the optimum conditions of producing crystalline nuclei can be automated.

The apparatus of the embodiment shown in Figure 3 merely has a base 23 to hold tube 1 in an erect state. When the volume of the refrigerant 7 is varied the level of the liquid refrigerant 7 will naturally vary, with the result that the height of the liquid phase with respect to the tube 1 will change. Accordingly, the upward movement of the surface of the refrigerant liquid causes improper freezing of the buffer solution or excessively low liquid level adversely influences the fertilized ova or spermatozoa to be frozen. In order to eliminate such a problem it is necessary always to monitor the liquid level of the refrigerant 7 and to maintain suitably the liquid level by supplying refrigerant 7.

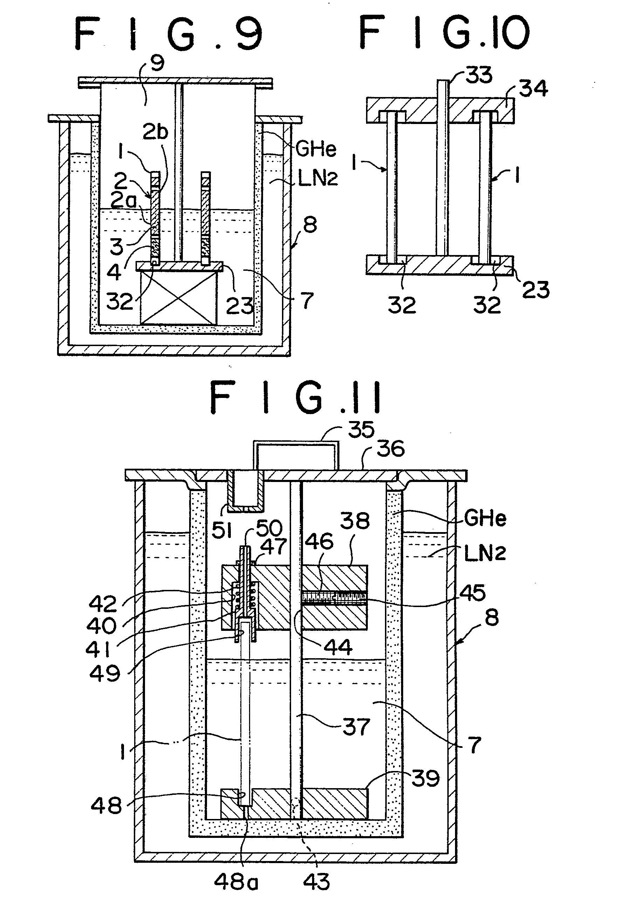

This problem can be overcome by yet another preferred embodiment of apparatus, shown in Figure 8, wherein like reference numerals in Figure 8 to those in Figure 3 designate the same or equivalent parts. The difference between this embodiment and that shown in Figure 3 is that a base 24 floats on the liquid surface of the refrigerant 7 and the tube 1 is passed through the floating base 24 substantially perpendicularly thereto as shown. The floating base 24 consists of floats 25 and 25' on which is placed a plate 26 with the tube 1 supported through a hole 27 therethrough. The tube 1 projects from the plate 26 by a predetermined length, for example, by approx. 30 mm and the buffer solution segment 2a containing the fertilized ova or spermatozoa 3 to be frozen, is submerged in the refrigerant 7.

A guide column 28 is inserted in the refrigerant 7 to contain the floating base 24 by means of guide elements 29, 29' slidably provided on the inner wall of the guide column 28. Slits 30 are formed at the lower portion of the guide column 28 to permit the refrigerant 7 to flow into or out of the column 28. A cover plate 31 covers the top of the guide column 28.

By this means any change in the volume of the refrigerant 7, causing the variation in the liquid level of the refrigerant 7, is compensated by the floating base 24 which moves in accordance with the change in the liquid level of the refrigerant 7. In this manner, the vapor phase length and the liquid phase length of the tube 1 can be maintained constant.

In this embodiment of the apparatus for executing the method of freezing fertilized ova or spermatozoa, the floating base 24 is floated on the liquid surface of the refrigerant 7, the tube 1 is inserted and supported in the floating base 24, the buffer solution segment 2b containing no fertilized ova or spermatozoa of the tube 1 extends upwardly from the floating base 24 by a predetermined length into the vapor phase portion, and the buffer solution segment 2a containing fertilized ova or spermatozoa extends from the floating base 24 downwardly by a predetermined length into the refrigerant 7 to be dipped therein. Therefore, even if the volume of the refrigerant 7 is varied, the vapor phase and the liquid phase of the tube 1 can be always maintained uniformly at a desired predetermined length, thereby eliminating the necessity of performing such complicated operations as monitoring the liquid level of the refrigerant 7 and supply of refrigerant.

In the apparatus of the embodiment shown in Figure 3, the tube 1 is merely placed on the base 23 as shown, but the tube 1 cannot be held erect with this arrangement. A simple means for holding the tube 1 will be described with reference to Figure 9, in which the base 23 is formed of a metallic plate, having a recess or recesses 32 on the upper surface for engaging the bottom of the tube 1. When the base 23 is removed from the refrigerant 7, moisture contained in the atmosphere condenses on the metallic plate 23 maintained at low temperature and is frozen. This results in the tube 1 becoming iced into the recess 23 formed on the metallic plate 23, whereby it cannot easily be removed from the recess 32.

Therefore, the holes 32 formed on the upper surface of the metallic plate or base 23 are so formed, as shown in Figure 10, to have a diameter larger than that of the bottom of the tube 1 as not to ice and secure the tube 1 to the recess. In this construction if the tube 1 is not held down, it will float because of the buoyancy of the refrigerant 7. Accordingly, a weight plate 34 is elevationally movably arranged about a guide rod 33 extending from the base or metallic plate 23 to thereby urge down the tube or tubes 1 onto the base or metallic plate 23.

In the arrangement described with reference to Figure 10, when a number of tubes 1 are provided, the tubes 1 must be installed between the base or metallic plate 23 and the weight plate 34 one by one causing a great expenditure of labor and time.

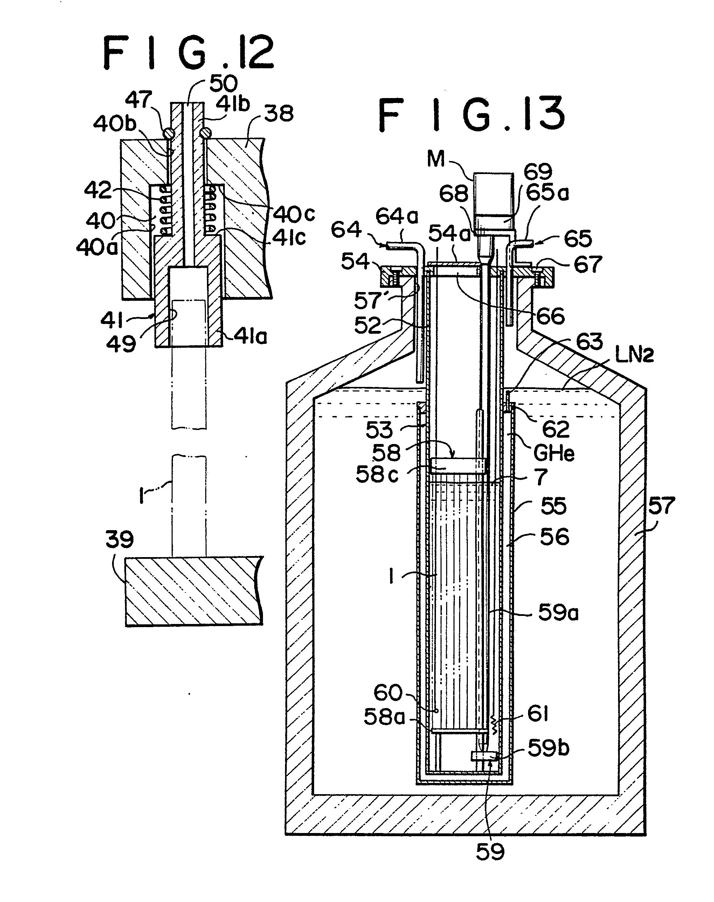

This problem can be overcome by a further embodiment of the apparatus for freezing fertilized ova or spermatozoa as shown in Figures 11 and 12. In this embodiment freezing of tubes to the base or metallic plate due to freezing of atmospheric moisture can be prevented, floating or fluctuating of the tubes from the base or metallic plate is overcome but the tubes can be firmly secured to the base or metallic plate, and the tubes can be simply and rapidly charged without much labor and time consumption.

The apparatus shown in Figures 11 and 12, has a constant low temperature tank 8 containing refrigerant such as $LN_2$, or GHe similar to the previous embodiments of the apparatus. A cover plate 36 is provided as an upper cover of the tank 8 with a handle 35 attached, and a guide rod 37 is perpendicularly secured to the center on the lower surface of the cover plate 36. Upper and lower mounting members 38 and 39 are mounted with a predetermined spacing at the upper and lower portions of the guide rod 37, and a tube holding slide pin 41 formed of synthetic resin, e.g., Teflon (Registered Trade Mark) is inserted through the mounting hole 40 of the upper mounting member 38. A coiled spring 42 is mounted around the slide pin 41 to urge downwardly the slide pin 41 for resiliently holding the tube 1 between the lower mounting member 39 and the slide pin 41.

The upper and lower mounting members 38 and 39 are formed of synthetic resin, e.g., Teflon (Registered Trade Mark), thereby preventing icing by atmospheric moisture of a straw tube 1. The members 38 and 39 are relatively movably towards and away from each other on the guide rod 37 to hold tubes 1 of different lengths.

The lower mounting member 39 is clamped by clamping screw 43 to the guide rod 37, and the upper mounting member 39 is adjustably mounted to the guide rod 37 by means of a threaded hole 45 to a hole 44 in the upper mounting member 38 through which passes the guide rod 37. A clamping screw 46 engages in the threaded hole 45, thereby securing the upper mounting member 38 at a desired predetermined position.

The mounting hole 40 of the upper mounting member 39 and the slide pin 41 are so correspondingly formed that larger-diameter portions 40a, 41a are formed at the lower portions thereof and smaller-diameter portions 40b and 41b are formed at the upper portions thereof. The spring 42 is interposed between the downward stepped portion 40c of the mounting hole 40 of the upper mounting member 38 and the shoulder portion 41c of the slide pin 41, to urge resiliently the slide pin 41 downwardly. An O-ring 47 encircling the projecting end of the small-diameter portion 41b of the slide pin 41 prevents the slide pin 41 from falling from the upper mounting member 38.

A plurality of slide pins 41 may be supported by the upper mounting member 38 in a similar manner to the above arrangement, and in this case, a plurality of mounting holes 40 may be perforated at equal interval along a circular line centered on the inserting hole 44, and a respective slide pin 41 may be supported at each of the mounting holes 40.

The bearing recesses of the tubes 1 at the lower mounting member 39 may be formed as recesses 48 as shown in Figure 11, or may be formed as mere flat smooth surface as shown in Figure 12.

In case of the bearing recesses 48 formed on the upper surface of the lower mounting member 39, the recesses 48 may be preferably formed to have a diameter larger than that of the tubes 1. A drain hole 48a may be formed in the bottom of each recess 48 to avoid the retention of the refrigerant 7 therein.

On the bottom surface of the slide pin 41 a recess 49 for supporting the tube 1, and a sensor hole 50 opening to the top surface longitudinally through the slide rod 41.

In this case, the diameter of the recess 49 for supporting the tube 1 is preferably larger than that of the tube 1.

When the slide pin 41 is thus formed, the tube 1 may be accurately and effectively held at a predetermined position with its upper end held in the recess 49.

A thermometer mounting column 51 may be provided in the cover plate 36 directly above the sensor hole 50 of the slide pin 41. A thermometer may be mounted in the column 51 from the hole 50 the tube 1 for detecting the temperature in the tube 1.

As described above, the apparatus is constructed with the upper and lower mounting members 38 and 39 made of synthetic resin and mounted about the guide rod 37. The tube holding slide pin 41, also formed of synthetic resin is resiliently mounted by means of the spring 42 to the upper mounting member 38 to be urged downwardly, whereby the tube 1 is elastically held between the slide pin 41 and the lower mounting member 39. Therefore, the slide pin 41 can be moved upwardly against the tension of the spring, the tube 1 can be placed on the lower mounting member 39, and the upward tension of slide pin 41 is released, whereon it moves downwardly under the tension of the spring to elastically hold the tube 1 between the slide pin 41 and the lower mounting member 39. Accordingly, even when a number of tubes are elastically held between respective guide pins and the lower mounting member, the above simple operation may be repeated to rapidly mount the tubes without any floating and the fluctuation of the tubes.

Further, since synthetic resin is used for suitable members and parts, icing of the members and parts to be mounted is prevented. The upper and lower mounting members 38 and 39 are formed integrally with the cover plate 36 via the guide rod 37, and the tubes 1 can be readily mounted in and removed from the constant low temperature tank 8, and the cover plate may be opened or closed simultaneously for convenience of practical use.

The apparatuses of the previous various embodiments described above have the constant low temperature tank and the temperature controller integrally connected. Therefore, the entire configuration of the apparatus becomes large and difficult to be moved. Accordingly, fertilized ova or spermatozoa collected in the field must be transported to a location installed with the apparatus for freezing, with the result that many fertilized ova or spermatozoa die in the course of freezing, thereby decreasing the yield.

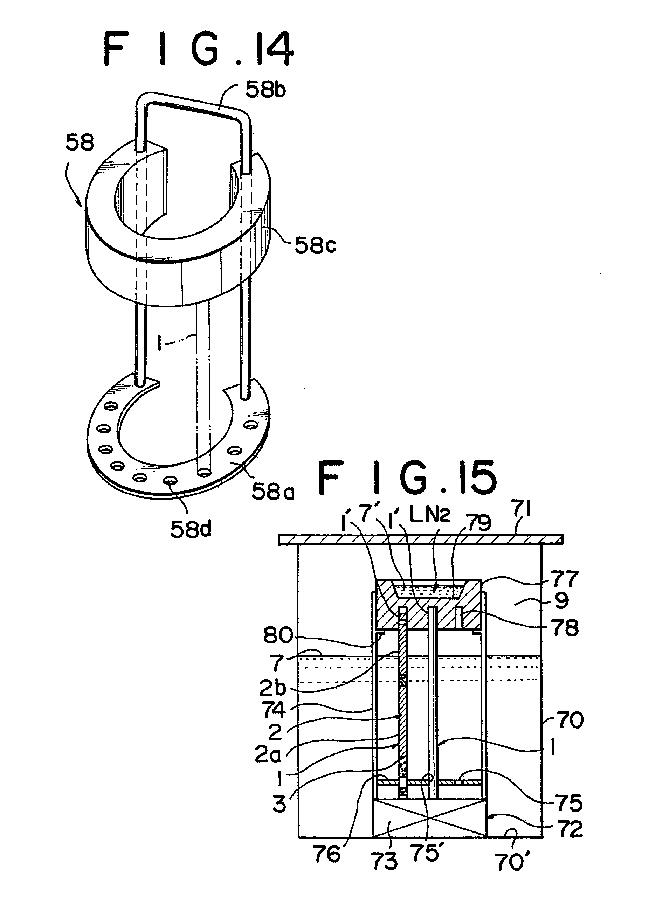

The apparatus shown in Figures 13 and 14 is readily portable so as to overcome the above-mentioned problem, and the portable freezing apparatus is readily capable of being connected to a low temperature liquefied gas container brought into the field. Thus, the collected fertilized ova or spermatozoa may be immediately frozen in this manner, thereby minimizing the death rate.

In Figure 13, the apparatus of this embodiment has an inner tank 53 formed of a column 52 with a bottom, a cover plate 54 placed fixedly on the top of the inner tank 53, an outer concentric tank 56 formed of a column 55 with a bottom having a diameter larger than that of the column 52. The integrated tanks 53 and 56 are detachably mounted in a low temperature liquefied gas container 57, which is detachably closed by the cover plate 54 at the opening 57'.

In the inner tank 53, which contains a refrigerant 7 such as Freon (Registered Trade Mark), are internally mounted a tube erecting base 58, an agitator 59, a thermometer 60 and a heater 61.

The outer tank 56 contains sealed therein a heat exchanging medium, e.g., GHe. The sealing means has a supporting plug 62 for securing together the column 55 and the column 53 of the inner tank 53, and a filling tube 63 extending through the plug 62. After the medium, e.g., GHe is filled from the tube 63 into the outer tank 56, it is sealed. Alternatively a valve (not shown) mounted to the tube 63 is closed after filling the medium.

Further, a low temperature liquefied gas supply port 64 and a vaporized gas exit 65 provided at the cover plate 54 for supplying the liquefied nitrogen

$LN_2$, and communicate with the liquefied gas container 57 through pipes 64a, 65a passing through the cover plate 54. During use of the apparatus, $LN_2$ is supplied from the supply port 64 to the container 57 and the vaporized gas from the $LN_2$ is exhausted from the exit 65.

An opening 66 is provided in the cover plate 54 for mounting or dismounting the tube erecting base 58, and the opening 66 may be firmly closed by an openable cover 54a.

In this apparatus the cover 54 is detachably secured to the opening lip of the liquefied gas container 57 by means of a bolt 67.

The tube erecting base 58 is shown in Figure 14. A guide and handle 58b stands on a horseshoe-shaped base 58a and a tube holder 58c is slidably engaged with two legs of the handle 58b. The tube 1 is placed in a recess 58d formed in the upper surface of the base 58a, with the top end of the tube 1 held by the holder 58c, thereby enabling a plurality of tubes 1 to be mounted. The base 58a and the holder 58c are formed in a horseshoe shape to eliminate disturbance of the agitator 59 etc when placing the tubes into the narrow inner tank 53.

The above-mentioned agitator 59 has its rotational shaft (not shown) inserted into a bearing tube 59a vertically mounted on a supporting base secured to the cover plate 54. Agitating blades 59b are provided at the projecting end of the rotational shaft and are driven rotatably via a reduction gear 69 by a motor M located on the cover plate 54.

In order to freeze fertilized ova or spermatozoa the cooling effect of $LN_2$ is transferred through the GHe to the refrigerant 7, and the temperature of the refrigerant 7 is set to the predetermined conditions by the agitator 59, the thermometer 60 and the heater 61.

As described above, the apparatus of this embodiment has the cover plate 54 at the upper edge of the inner tank 53 to contain the refrigerant 7, e.g., Freon (Registered Trade Mark), and the outer tank 56 sealing heat exchanging medium, e.g., helium around the inner tank 53. The tube erecting base 58 is mounted in the refrigerant 7 in the inner tank 53 with the agitator 59, heater 61, and thermometer 60 mounted internally. The low temperature liquefied gas supply port 64 and the vaporized gas exit 65 of the container 57 are provided at the same cover plate 54. The inner tank 53 containing the tube 1 together with the refrigerant 7 and the outer tank 56 sealing the heat exchanging medium are integrally formed, and therefore the apparatus can be made very small compared with the low temperature liquefied gas container 57, and can accordingly be easily transported. Thus, the apparatus of this embodiment can be readily transported to the field, and the fertilized ova or spermatozoa collected in the field can be immediately preserved in the refrigerant 7. Thereafter, the freezing apparatus can be installed in a standard liquefied nitrogen gas container 57 which can be obtained readily. Accordingly, the death rate of the fertilized ova or spermatozoa can be greatly reduced compared to use of conventional apparatus, thereby improving the yield.

The apparatus of this embodiment is simply fabricated and is compact. The motor M of the agitator 59 may be a small light weight type and inexpensive.

Still another preferred embodiment of the apparatus is shown in Figure 15. The apparatus of this embodiment has a cooling tank 70, an openable cover 71 for the tank 70, refrigerant 7, e.g., methyl alcohol or Freon (Registered Trade Mark) contained in a predetermined quantity in the cooling tank 70 to be cooled suitably by cooling means such as a refrigerating machine, and a vapor phase portion 9 formed in the upper portion of the refrigerant 7 in the tank 70.

The apparatus of this embodiment further has a tube erecting trestle 72 submerged in the refrigerant 7 at the bottom 70' of the cooling tank 70, a side frame 74 standing on a base 73 at the trestle 72, and a plate 76 perforated with through holes 75, 75' and horizontally mounted directly above the base 73 at the base of the side frame 74. Tubes 1, 1, are inserted into the holes 75, 75' and stand on the base 73.

The tubes 1 have their lower half portions in the refrigerant 7, and their upper half portions extending from the refrigerant 7 into the vapor phase portion 9.

A heat transfer block 77 formed of a heat conducting substance, e.g, copper is engaged and placed on the top ends 1', 1', . . . of the tubes 1, 1. Engaging recesses 78, 78, . . . are provided on the lower surface of the block 77 to engage the top ends 1', 1', . . . of the tubes 1,1. A refrigerant storage recess 79 is formed on the top surface of the block 77 to contain refrigerant, e.g., liquefied nitrogen $LN_2$ or dry ice. Heat transfer block supporting edges 80 project from the top of the side frame 74 as shown.

To freeze the fertilized ova or spermatozoa with the apparatus of this embodiment, the tubes 1, 1,. . . are erected on the trestle 72 as described above, with their lower half portions submerged in the refrigerant, the heat transfer block 77 is engaged and placed on the top ends 1', 1', of the tubes 1,1, and the refrigerant 7' is placed in the refrigerant storage recess 79, thereby cooling the top ends 1', 1',. . . of the tubes 1,1,. . . and freezing the upper buffer solution segment 2b. At this time the refrigerant 7 is not yet frozen, and the lower buffer solution segment 2a is not yet frozen.

Then, the refrigerant 7 is cooled by cooling means, e.g., a refrigerating machine, thereby lowering the temperature of the lower buffer solution segment 2a to its freezing point. Thus, the crystalline nuclei in the upper buffer solution segment 2b will gradually grow and hence completely freeze the lower buffer solution 2a without super cooling.

In this manner, the freezing of the fertilized ova or spermatozoa can be performed with high reliability without super cooling of the lower buffer solution segment 2a, with an expensive apparatus of simplified construction.

**Claims**

1. A method of freezing fertilized ova or spermatozoa in which the fertilized ova, or spermatozoa are placed in a buffer solution in a tube, and cooled by the action of a refrigerant, characterised in that the fertilized ova or spermatozoa to be frozen are congregated in a first portion of the buffer solution, a second portion of the buffer solution containing no fertilized ova or spermatozoa to be frozen is cooled, so that the temperature of the second portion is lower than the temperature of said first portion and freezes to produce crystalline nuclei, maintaining the temperature of the first portion of the buffer solution substantially at the freezing point of the buffer solution, then cooling the crystalline nuclei in the second portion so that the nuclei grow into the first portion to freeze the buffer solution, thereby freezing the fertilized ova or spermatozoa.

2. A method as claimed in claim 1, characterised in that after the crystalline nuclei are produced in the second portion of the buffer solution, the temperature of the refrigerant for cooling the first portion of the buffer solutoin is gradually lowered.

3. A method as claimed in either claim 1 or 2, characterised in that the maximum liquid temperature of the second portion of the buffer solution is measured when the crystalline nuclei are produced, and the temperature of the first portion of the buffer solution is automatically controlled to the vicinity of the measured temperature.

4. An apparatus for freezing fertilized ova or spermatozoa which are contained in a buffer solution in a tube coolable by a refrigerant, characterised in that the apparatus comprises a base (24) floated on the liquid surface of the refrigerant and means to so support said tube (1) in said base (24) that a portion of said buffer solution containing no fertilized ova or spermatozoa to be frozen extends from said floating base (24) upwardly for a predetermined length into a vapour phase portion above the refrigerant liquid surface and a portion of the buffer solution containing the fertilized ova or spermatozoa to be frozen extends from said floating base (24) downwardly for a predetermined length into the liquid refrigerant.

5. An apparatus for freezing fertilized ova or spermatozoa which are contained in a buffer solution in a tube coolable by a refrigerant, characterised in that the apparatus comprises a tube (1) containing a first portion of the buffer solution which contains the fertilized ova or spermatozoa to be frozen and a second portion of the buffer solution which contains no fertilized ova or spermatozoa to be frozen, a constant low temperature tank (8) containing the refrigerant, a cover plate (36) to close an opening in the tank (8), a guide rod (37) mounted substantially vertically on the cover plate (36), upper and lower mounting members (38, 39) of synthetic resin mounted on said guide rod, and a slide pin (41) of synthetic resin for holding said tube (1) and urged resiliently downwardly from said upper mounting member (38), thereby releasably holding said tube (1) between said slide pin (41) and said lower mounting member (39).

6. An apparatus as claimed in claim 5, characterised in that the upper mounting member (38) is mounted adjustably on said guide rod (37).

7. An apparatus as claimed in either claim 5 or claim 6, characterised in that said slide pin (41) comprises a downwardly facing tube inserting recess (49) and an upwardly facing sensor hole (50) communicating with said inserting recess (49).

8. An apparatus for freezing fertilized ova or spermatozoa which are contained in a buffer solution in a tube coolable by a refrigerant characterised in that the apparatus comprises a tube (1) containing a first portion of the buffer solution containing the fertilized ova or spermatozoa to be frozen and a second portion of the buffer containing no fertilized ova or spermatozoa to be frozen, an inner tank (53) containing the refrigerant, a cover (54) attachable to the upper edge of said inner tank (53), an outer tank (56) containing heat exchanging medium and integrally formed with and surrounding said inner tank (53), a tube erecting base (58) removably contained in said inner tank (53), an agitator (59), a heater (61) and a thermometer (60) located in said inner tank (53) the cover (54) of said inner tank (53) being detachably connectable to a low temperature liquefied gas container (57), and having a low temperature liquefied gas supply port (64) and a vaporized gas exit port (65) for communication with said container (57).

9. An apparatus as claimed in claim 8, characterised in that said tube erecting base (58) comprises a horseshoe-shaped tube supporting base portion (58a), a guide and handle (58b) extending from said base portion (58a), and a horseshoe-shaped tube holder (58c) slidably mounted to said guide (58b).

10. An apparatus for freezing fertilized ova or spermatozoa which are contained in a buffer solution in a tube coolable by a refrigerant characterised in that the apparatus comprises a plurality of tubes (1) each containing a first portion of the buffer solution containing the fertilized ova or spermatozoa to be frozen and a second portion of the buffer solution containing no fertilized ova or spermatozoa to be frozen, and second portion being disposed above the first portion, a cooling tank (70) containing a first refrigerant, a tube erecting trestle (72) to so support said tubes (1) that the upper portions thereof extend into a vapor phase formed in the upper portion of said cooling tank (70), and a heat transfer block (77) engagable on the upper ends of said tubes (1) and provided with a recess (79) thereon to contain a second refrigerant.

11. An apparatus as claimed in claim 10, wherein said heat transfer block (77) comprises a plurality of holes (78) in the lower surface thereof for engaging the top ends of said tubes (1) and a refrigerant storage recess (79) on the upper surface thereof.

**Patentansprüche**

1. Verfahren zum Gefrieren von befruchteten Eizellen oder Spermatozoen, bei dem die befruchteten Eizellen oder Spermatozoen in eine Pufferlösung in einem Rohr eingebracht und unter der Wirkung eines Kühlmittels abgekühlt werden, dadurch gekennzeichnet, dass die zu gefrierenden, befruchteten Eizellen oder Spermatozoen in einem ersten Teil der Pufferlösung angehäuft werden, ein zweiter, keine zu gefrierende befruchtete Eizellen oder Spermatozoen enthaltender Teil der Pufferlösung so abgekühlt wird, dass die Temperatur des zweiten Teils niedriger als die Temperatur des besagten ersten Teils ist und er zur Erzeugung von Kristallkeimen gefriert, wobei man die Temperatur des ersten Teils der Pufferlösung im wesentlichen beim Gefrierpunkt der Pufferlösung hält, dann die Kristallkeime im zweiten Teil so abkühlt, dass die Keime in den ersten Teil hineinwachsen, um die Pufferlösung zu gefrieren, und dadurch die befruchteten Eizellen oder Spermatozoen gefrieren.

2. Verfahren nach Anspruch 1, dadurch gekennzeichnet, dass nach der Erzeugung der Kristallkeime im zweiten Teil der Pufferlösung die Temperatur des Kühlmittels zu Abkühlung des ersten Teils der Pufferlösung allmählich erniedrigt wird.

3. Verfahren nach Anspruch 1 oder 2, dadurch gekennzeichnet, dass die höchste Flüssigkeitstemperatur des zweiten Teils der Pufferlösung während der Erzeugung der Kristallkeime gemessen wird und die Temperatur des ersten Teils der Pufferlösung automatisch auf ungefähr die gemessene Temperatur geregelt wird.

4. Vorrichtung zum Gefrieren von befruchteten Eizellen oder Spermatozoen, die in einer Pufferlösung in einem durch eine Kühlmittel Kühlbaren Rohr enthalten sind, dadurch gekennzeichnet, dass die Vorrichtung aus einem auf der Flüssigkeitsoberfläche des Kühlmittels schwimmenden Unterteil (24) und solchen Stützmitteln für das besagte Rohr (1) in diesem Unterteil (24) besteht, dass ein Teil jener keine zu gefrierende, befruchtete Eizellen oder Spermatozoen enthaltenden Pufferlösung sich von diesem schwimmenden Unterteil (24) nach oben über eine vorbestimmte Länge in einem Dampfphasenteil über der Kühlflüssigkeitsoberfläche erstreckt und ein Teil der zu gefrierende, befruchtete Eizellen oder Spermatozoen enthaltenden Pufferlösung sich von diesem schwimmenden Unterteil (24) nach unten über eine vorbestimmte Länge in die Kühlflüssigkeit erstreckt.

5. Vorrichtung zum Gefrieren befruchteter Eizellen oder Spermatozoen, die in einer Pufferlösung in einem durch ein Kühlmittel Kühlbaren Rohr enthalten sind, dadurch gekennzeichnet, dass die Vorrichtung aus einem Rohr (1), das einen ersten Teil der Pufferlösung, welcher die zu gefrierenden, befruchteten Eizellen oder Spermatozoen enthält, und einen zweiten Teil der Pufferlösung ohne zu gefrierende, befruchtete Eizellen oder Spermatozoen enthält, einem das Kühlmittel bei konstanter, tiefer Temperatur enthaltenden Gefäss (8), einer Abdeckplatte (36) zum Verschliessen einer Oeffnung im Gefäss (8), einem im wesentlichen senkrecht auf der Abdeckplatte (36) angebrachten Führungsstab (37), oberen und unteren, auf diesem Führungsstab angebrachten Befestigungsgliedern (38, 39) aus Kunstharz und einem Gleitstift (41) aus Kunstharz zur Halterung jenes Rohrs (1), der vom besagten oberen Befestigungsglied (38) federnd nach unten gedrückt wird, wodurch jenes Rohr (1) lösbar zwischen jenem Gleitstift (41) und einem unteren Befestigungsglied (39) gehalten wird, besteht.

6. Vorrichtung nach Anspruch 5, dadurch gekennzeichnet, dass das obere Befestigungsglied (38) auf diesem Führungsstab (37) einstellbar angeordnet ist.

7. Vorrichtung nach Anspruch 5 oder 6, dadurch gekennzeichnet, dass dieser Gleitstift (41) eine nach unten gerichtete Rohreinsetzausnehmung (49) und ein nach oben gerichtetes, mit dieser Einsetzausnehmung (49) in Verbindung stehendes Fühlerloch (50) umfasst.

8. Vorrichtung zum Gefrieren von befruchteten Eizellen oder Spermatozoen, die in einer Pufferlösung in einem durch ein Kühlmittel kühlbaren Rohr enthalten sind, dadurch gekennzeichnet, dass die Vorrichtung aus einem Rohr (1), das einen ersten Teil der Pufferlösung, welcher die zu gefrierenden, befruchteten Eizellen oder Spermatozoen enthält, und einen zweiten Teil des Puffers ohne zu gefrierende, befruchtete Eizellen oder Spermatozoen enthält, einem inneren, das Kühlmittel enthaltenden Gefäss (53), einem am oberen Rand dieses inneren Gefässes (53) anbringbaren Deckel (54), einem ässeren, Wärmeaustauschmedium enthaltenden und einstückig mit besagtem inneren Gefäss (53) ausgebildeten und dieses umgebenden Gefäss (56), einem in diesem inneren Gefäss (53) herausnehmbar enthaltenden Rohraufstellfuss (58), einem Rückwerk (59), einer Heizvorrichtung (61) und einem in diesem inneren Gefäss (53) angeordneten Thermometer (60) besteht, wobei der Deckel (54) dieses inneren Gefässes (53) lösbar mit einem Behälter (57) für bei tiefer Temperatur verflüssigtes Gas verbindbar ist und eine Zufuröffnung (64) für bei tiefer Temperatur verflüssigtes Gas und eine Auslassöffnung (65) für verdampftes Gas zur Verbindung mit einem Behälter (57) aufweist.

9. Vorrichtung nach Anspruch 8, dadurch gekennzeichnet, dass dieser Rohraufstellfuss (58) aus einem hufeisenförmigen, das Rohr abstützenden Unterteil (58a), einem sich von diesem Unterteil (58a) erstreckenden Führungsgriff (58b) und einem hufeisenförmigen, auf dieser Führung (58b) verschieblich gelagerten Rohrhalter (58c) besteht.

10. Vorrichtung zum Gefrieren von befruchteten Eizellen oder Spermatozoen, die in einer Pufferlösung in einem durch ein Kühlmittel kühlbaren Rohr enthalten sind, dadurch gekennzeichnet, dass die Vorrichtung aus einer Mehrzahl von Rohren (1), die jeweils einen ersten Teil der Pufferlösung, welcher die zu gefrierende, befruchteten Eizellen oder Spermatozoen enthält, und einen zweiten Teil der Pufferlösung ohne zu gefrierende, befruchtete Eizellen oder Spermatozoen enthalten, wobei der zweite Teil über der ersten Teil angeordnet ist, einem ein erstes Kühlmittel enthaltenden Kühlgefäss (70), einem Rohraufrichtgestell (72) zur Abstützung dieser Rohre (1), derart dass sich deren obere Teile in eine im oberen Teil dieses Kühlgefässes (70) gebildete Dampfphase erstrecken, und einem Wärmeübertragerblock (77), der mit den oberen Enden dieser Rohre (1) in Eingriff kommen kann und mit einer Ausnehmung (79) darauf für ein zweites Kühlmittel versehen ist, besteht.

11. Vorrichtung nach Anspruch 10, worin dieser Wärmeübertragerblock (77) in seiner Unterfläche eine Mehrzahl Löcher (78) zum Eingriff mit den Kopfenden jener Rohre (1) und eine Kühlmittelspeicherausnehmung (79) auf seiner oberen Fläche aufweist.

**Revendications**

1. Procédé de congélation d'ovules fécondés ou de spermatozoïdes, dans lequel les ovules fécondés ou les spermatozoïdes sont placés dans une solution tampon dans un tube et refroidis sous l'effet d'un agent réfrigérant, caractérisé en ce que les ovules fécondés ou les spermatozoïdes à congeler sont rassemblés dans une première partie de la solution tampon, une seconde partie de la solution tampon ne contenant pas d'ovules fécondés ou de spermatozoïdes à congeler est refroidie de façon que la température de la seconde partie soit inférieure à la température de la première partie et se congèle en produisant des germes cristallins, en maintenant la température de la première partie de la solution tampon sensiblement au point de congélation de la solution tampon, puis en refroidissant les germes cristallins dans la seconde partie de façon que les germes croissent jusque dans la première partie pour congeler la solution tampon, de manière à congeler les ovules fécondés ou les spermatozoïdes.

2. Procédé suivant la revendication 1, caractérisé en ce qu'après que les germes cristallins ont été produits dans la seconde partie de la solution tampon, la température de l'agent réfrigérant pour le refroidissement de la première partie de la solution tampon est abaissée graduellement.

3. Procédé suivant la revendication 1 ou 2, caractérisé en ce que la température de liquidus maximale de la seconde partie de la solution tampon est mesurée lorsque les germes cristallins sont produits et la température de la première partie de la solution tampon est réglée automatiquement au voisinage de la température mesurée.

4. Appareil pour la congélation d'ovules fécondés ou de spermatozoïdes qui sont contenus dans une solution tampon dans un tube qui peut être refroidi par un agent réfrigérant, caractérisé en ce que l'appareil comprend une base (24) flottant sur la surface liquide de l'agent réfrigérant et un dispositif pour soutenir le tube (1) dans la base (24) de façon qu'une partie de la solution tampon ne contenant pas d'ovules fécondés ou de spermatozoïdes à congeler s'étende à partir de la base flottante (24) vers le haut sur une longueur déterminée au préalable dans une partie en phase vapeur au-dessus de la surface liquide de l'agent réfrigérant et qu'une partie de la solution tampon contenant les ovules fécondés ou les spermatozoïdes à congeler s'étende à partir de la base flottante (24) vers le bas sur une longueur déterminée au préalable dans l'agent réfrigérant liquide.

5. Appareil pour la congélation d'ovules fécondés ou de spermatozoïdes qui sont contenus dans une solution tampon dans un tube qui peut être refroidi par un agent réfrigérant, caractérisé en ce que l'appareil comprend un tube (1) contenant une première partie de la solution tampon qui contient les ovules fécondés ou les spermatozoïdes à congeler et une seconde partie de la solution tampon qui ne contient pas d'ovules fécondés ou de spermatozoïdes à congeler, une cuve (8) à basse température constante contenant l'agent réfrigérant, une plaque de couverture (36) pour obturer un orifice dans la cuve (8), une tige de guidage (37) montée en substance verticalement sur la plaque de couverture (36), des organes de montage supérieur et inferieur (38, 39) en résine synthétique montés sur la tige de guidage et une broche coulissante (41) en résin synthétique pour tenir le tube (1) et pressée élastiquement vers le bas à partir de l'organe de montage supérieur (38) de façon à tenir le tube (1) de façon libérable entre la broche coulissante (41) et l'organe de montage inférieur (39).

6. Appareil suivant la revendication 5, caractérisé en ce que l'organe de montage supérieur (38) est monté réglable sur la tige de guidage (37).

7. Appareil suivant la revendication 5 ou 6, caractérisé en ce que la broche coulissante (41) comprend un évidement (49) débouchant vers le bas pour l'insertion du tube et un trou de détection (50) débouchant vers le haut communiquant avec l'évidement pour l'insertion (49).

8. Appareil pour la congélation d'ovules fécondés ou de spermatozoïdes qui sont contenus dans une solution tampon dans un tube qui peut être refroidi par un agent réfrigérant, caractérisé en ce que l'appareil comprend un tube (1) contenant une première partie de la solution tampon contenant les ovules fécondés ou les spermatozoïdes à congeler et une seconde partie de la solution tampon ne contenant pas d'ovules fécondés ou de spermatozoïdes à congeler, une cuve intérieure (53) contenant l'agent réfrigérant, un couvercle (54) qui peut être attaché au bord supérieur de la cuve intérieure (53), une cuve extérieure (56) contenant un milieu échangeur de chaleur et faisant corps avec la cuve intérieure (53) qu'elle entoure, une base d'érection de tube (58) contenue de faccon amovible dans la cuve intérieure (53), un agitateur (59), un dispositif de chauffage (61) et un thermomètre (60) logés dans la cuve intérieure (53), le couvercle (54) de la cuve intérieure (53) pouvant être raccordé de façon amovible à un récipient de gaz liquifié à basse température (57) et comportant un orifice d'admission de gaz liquéfié à basse température (64) et un orifice de sortie de gaz vaporisé (65) pour la communication avec le récipient (57).

9. Appareil suivant la revendication 8, caractérisé en ce que la base d'érection de tube (58) comprend une partie de base (58a) en fer à cheval supportant le tube, un guide et poignée (58b) s'étendant à partir de la partie de base (58a) et un portetube en fer à cheval (58c) monté coulissant sur le guide (58b).

10. Appareil pour la congélation d'ovules fécondés ou de spermatozoïdes qui sont contenus dans une solution tampon dans un tube qui peut être refroidi par un agent réfrigérant, caractérisé en ce que l'appariel comprend plusieurs tubes (1) dont chacun contient une première partie de la solution tampon contenant les ovules fécondés ou les spermatozoïdes à congeler et une seconde partie de la solution tampon ne contenant pas d'ovules fécondés ou de spermatozoïdes à congeler, la seconde partie étant disposée au-dessus de la première partie, une cuve de refroidissement (70) contenant un premier agent réfrigérant, un socle d'érection de tube (72) pour soutenir les tubes (1) de façon que les parties supérieures de ceux-ci s'étendent dans une phase vapeur formée dans la partie supérieure de la cuve de refroidissement (70) et un bloc de transfert de chaleur (77) qui peut être reçu sur les extrémités supérieures des tubes (1) et est muni d'un évidement (79) à sa partie supérieure pour contenir un second agent réfrigérant.

11. Appareil suivant la revendication 10, dans lequel le bloc de transfert de chaleur (77) comprend dans sa surface inférieure plusieurs trous (78) pour recevoir les extrémités supérieures des tubes (1) et un évidement accumulateur d'agent réfrigérant (79) sur sa surface supérieure.

FIG.1

FIG.2
(A)  (B)

FIG.3

# F I G . 4

FREEZING POINT

TEMPERATURE

TIME

X2

Y

X1

X

# F I G . 5

22
18
16
20 1 2b
13
8
21
2
19
2a
17
15
23
14

# F I G . 6

22
20
18
16
7′
1 2b
8
21
16′
19
2a
13
17
15
15′
3
7
23
14

2

# FIG.7

# FIG.8

# F I G . 9

# F I G .10

# F I G .11

# F I G .12

# F I G .13

# F I G .14

# F I G .15